Europäisches Patentamt

European Patent Office

Office européen des brevets

(11) Publication number: **0 074 167**
**A1**

# EUROPEAN PATENT APPLICATION

(21) Application number: 82303925.0

(22) Date of filing: 23.07.82

(51) Int. Cl.³: **C 02 F 1/46**

(30) Priority: 24.07.81 US 286565

(43) Date of publication of application:
16.03.83 Bulletin 83/11

(84) Designated Contracting States:
AT BE CH DE FR GB IT LI LU NL SE

(71) Applicant: DIAMOND SHAMROCK CORPORATION
717 North Harwood Street
Dallas Texas 75201(US)

(72) Inventor: Branchick, Kenneth J.
108 Doncaster Court
Mentor Ohio 44060(US)

(72) Inventor: Malkin, Irbing
4161 Silsby
University Heights Ohio 44118(US)

(72) Inventor: Suchanski, Mary R.
18 East Spanish Trail
Rochester New York 14620(US)

(74) Representative: Oliver, Roy Edward et al,
POLLAK,MERCER & TENCH High Holborn House 52-54
High Holborn
London WC1V 6RY(GB)

(54) Metal contaminant removal.

(57) An electrolytic process for the removal of a significant proportion of one or more metal contaminants from waste water involves treating the waste water in an electrolytic cell (10) having a plurality of anodes (16) and cathodes (17) in an alternating arrangement. Each anode (16) has openings, such as perforations or open interconnected pores, to permit the waste water to flow through. Each cathode (17) is a metallized open-cell organic polymeric foam substrate which has been metallized first electrolessly and then electrolytically.

FIG. I

EP 0 074 167 A1

Croydon Printing Company Ltd.

- 1 -

METAL CONTAMINANT REMOVAL

DESCRIPTION

This invention is directed to a process for reducing the concentration of one or more metals in aqueous solutions, such as plating wastes, particularly those derived from metal plating operations involving copper, cadmium, zinc, nickel and related metals. The process of this invention permits the removal of a significant proportion of one or more metal contaminants and facilitates metal recovery from plating waste waters in a form whereby the recovered metal can be recycled for subsequent use.

There is considerable and growing concern over pollution of waterways with various contaminants, such as the heavy metals, e.g., copper, nickel, zinc, mercury and cadmium, and nonmetallic contaminants such as cyanide, as well as complexes of the foregoing metals with cyanide, etc. Many of these pollutants enter water-ways from industrial sources, such as metal-finishing or plating plants, and from mining sources. Environmental legislation and regulations, on all government levels, set maximum allowable concentrations of these contaminants which may be discharged into public waterways.

A clear need exists for an economical yet effective process for treating waste waters to permit removal of a substantial proportion of contaminants, especially plating plant rinse waters, which customarily comprise aqueous solutions variously containing silver, copper, cadmium, mercury, zinc, nickel and other metals, with or without cyanide. These plating wastes must be treated prior to discharge.

At present, the most common method for removing or reducing the concentration of metals from aqueous plating waste solutions, prior to their disposal or discharge, is chemical treatment. Since different metals precipitate and/or react under different conditions, e.g., at different pH levels, it is difficult to devise a process for the treatment of various plating waste streams. Furthermore, most chemical treatment methods remove the metal by reaction and subsequent precipitation, which produces a metal sludge which must be disposed of and represents another pollution problem. Therefore, it is desirable to provide a metal removal process which is capable of reducing significantly the concentration of metal in plating plant rinse waters so as to achieve the low concentrations permitted for discharge or disposal, while at the same time recovering the metal in a pure state and without producing toxic sludges. Also, economic considerations call for a metal treatment process by which rinse waters can be treated preferably by a one-pass procedure, i.e. without requiring recirculation of the rinse water through the equipment employed to carry out the metal removal process.

The present invention provides a process for electrolytically reducing the concentration of the metal(s) present in plating plant rinse water, using either a single pass through the equipment or a recycling system including the equipment, which contains a plurality of anodes and cathodes.

Electrolytic attempts to remove metals, such as those described above, from plating plant rinse waters are known. For example, US-PS 3,954,594 discloses a two-compartment electrolytic cell, in which heavy metals are deposited upon electrically-conductive particles located in a cathode compartment. Separate from the cathode compartment, an anode compartment also contains a bed of electrically-conductive particles and is employed to neutralize, by oxidation, cyanide also contained in the waste water. Upon passage of a direct electric current between the two compartments, heavy metal is deposited upon the particles in the cathode compartment and the cyanide is oxidized in the anode compartment.

US-PS 4,197,181 describes a dual particulate bed electrode construction, including a stationary bed of carbonaceous particles, for removing metals from rinse waters. This electrode also incorporates a foam filter element, e.g., low density polyurethane foam, to filter out particulate material present in the electrolyte. Fibrous mats of graphite or carbon felt may be substituted for the carbonaceous particles. The carbonaceous particles, e.g., coke, are held in place in the cell compartment by an interface liner, e.g., a synthetic filter cloth. This electrode construction includes two stationary particulate bed assemblies, which are mated to one another in an electrically-connected relationship. When so mated, the electrode assemblies form an internal cavity into which can be fed the metal ion-containing solutions from which the metal values are to be extracted.

US-PS 4,226,685 (derived from US-PS 4,197,181) describes a method of treating plating wastes containing at least one heavy metal and (optionally) cyanide ions so that ionic contaminants, e.g., copper, are reduced to a concentration of 33 parts per million (one pass) and 15 parts per million (two passes), compared with the initial concentration (prior to contact with the electrode assemblies) of 150 parts per million (as cupric sulphate). The copper is deposited on the particulate stationary bed of carbonaceous particles, e.g., charcoal particles, and the beds are then assembled, so that the metal-plated carbonaceous particles can be removed and replaced. The metal-containing particles may be treated by conventional purifying techniques to obtain useful metals and alloys or plating solutions.

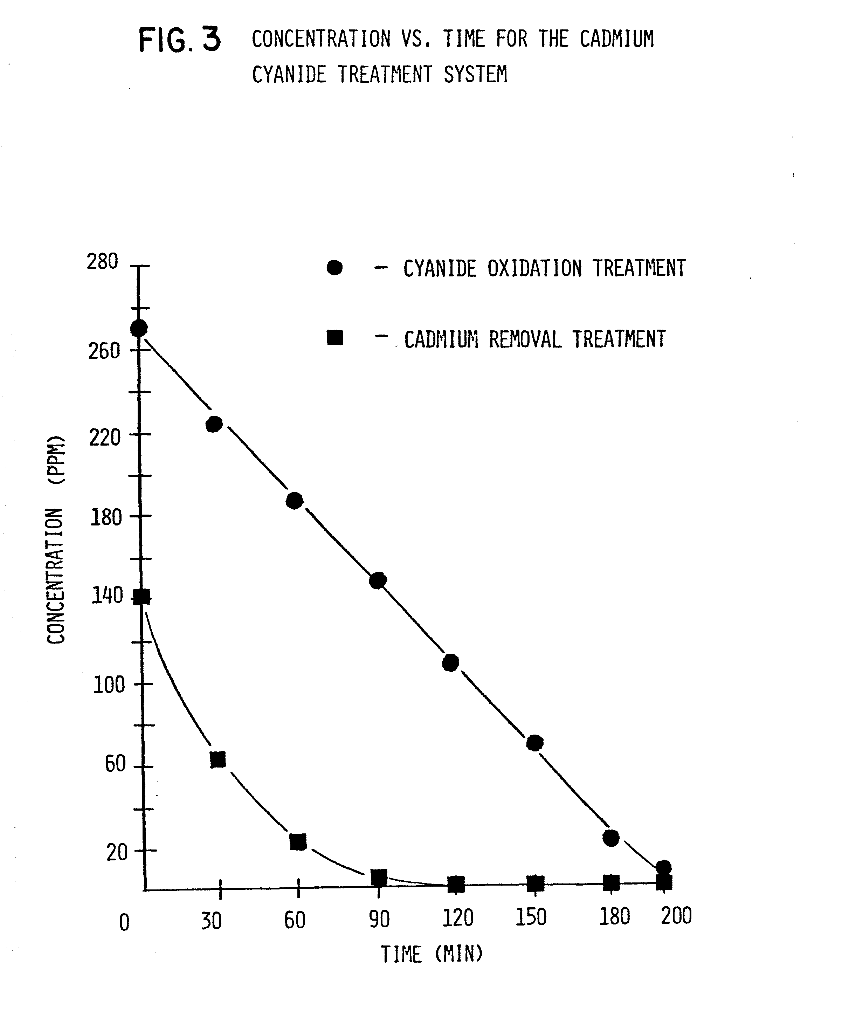

The JOURNAL OF APPLIED ELECTROCHEMISTRY 8 (1978) 195 to 205 comprises an article entitled "Characterization of Reticulate Three-Dimensional Electrodes" by A. Tentorio et al. This describes electrodes prepared from open-cell polyurethane foam upon which copper is deposited, first by electroless deposition and then by electrolytic deposition. Figure 3 of this article is an exploded view of an electrolytic cell utilizing such a copper-plated polyurethane foam electrode (cathode) in conjunction with a lead/lead oxide counter-electrode (anode) separated from the cathode by an ion exchange membrane. The solution to be treated, i.e. the copper-bearing rinse water described in the article, is pumped through the catholyte compartment of the cell. A separate anolyte comprising a 1M solution of $H_2SO_4$, is pumped independently of the catholyte through the anolyte compartment of the cell. It is stated that the cell of Figure 3 can operate in a waste water treatment system only by using multiple pass electrolysis and only with the concentration of pollutant, i.e., copper, after treatment being not below tens of parts per million, in order not to weigh down the recycle system excessively. Thus it seems clear that the use of such copper-plated polyurethane foam electrodes is contemplated only in cases where the waste water is subjected only to multiple pass electrolytic treatment in the cell, which moreover is separated by an ion exchange membrane into anolyte and catholyte chambers, the concentration of pollutants in the effluent water from the treatment process at least amounting to tens of parts per million.

According to this invention, in order to reduce the amount of one or more metal contaminants in waste water by passing it in contact with electrically-energized anodes and cathodes, the waste water is electrolysed in a membrane-free and diaphragm-free cell having a plurality of anodes alternating with a plurality of cathodes, each anode having openings through which the waste water flows and each cathode comprising a metallized open-cell organic polymeric foam substrate. Preferably, the polymeric foam substrate forming each cathode carries an electroless and then an electrolytic deposit of metal or alloy on and within the pores of the foam. In accordance with a preferred embodiment of the invention, concurrent metal removal and cyanide destruction are effected by using a combination of metallized organic polymeric foam anodes and cathodes and operating the cell according to a recirculating (recycle) mode.

The present invention is thus directed to a membrane-free and diaphragm-free process for treating aqueous plating wastes containing at least one metal and, optionally, concurrently removing (by oxidizing) cyanide therefrom, so that the metal contaminants and cyanide are reduced to sufficiently low concentrations to permit discharge. The process of this invention permits the metal or metals so removed to be accumulated on the polymeric foam electrodes in a manner well suited to allow recovery of the metal, e.g. by heating the spent electrodes so as to pyrolyze the organic portion. The process of this invention can also involve the use of a combination of conventional anodes with the plated electrodes based on polymeric foam substrates containing open interconnected pores. The process of this invention yields significant reductions in the metal contents of plating plant rinse waters or other aqueous streams, initially containing fairly low concentrations, viz., 200 to 100 mg/litre (equivalent to the same numbers in parts per million). Reduction in the content of the metals to be removed has been achieved, by use of the process of this invention, so that a single pass reduces the metal concentration from an initial figure in the range from 140 to 180 parts per million to an effluent concentration in the range from 5 to 25 parts per million.

When it is desired not only to remove one or more metal contaminants, but also to oxidize cyanide present in rinse water, it is preferable to recycle the rinse water in a closed loop system. The metal and cyanide concentrations of the treated water coming out of the cell are characteristically lowered significantly enough to allow it to be used as fresh rinse water. In such cases, metallized polymeric foam anodes, e.g., nickel-plated organic polymeric foam electrodes, are utilized to oxidize the cyanide to cyanate. This form of the process of treatment is preferably carried out at a highly alkaline pH, viz., at a pH value above about 11, e.g., from $11^+$ to 13.

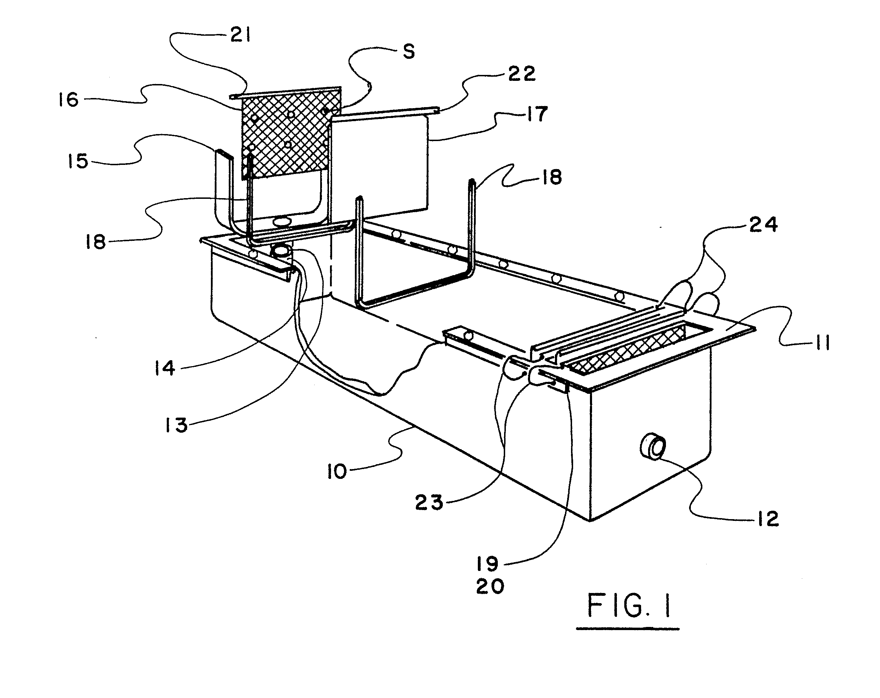

Figure 1 of the accompanying drawing is a perspective view of an electrolytic cell for use in carrying out the metal removal process of this invention, a portion being shown in exploded perspective view and the other portion being shown assembled for use. This electrolytic cell is described and claimed in copending U.S. Patent Application Serial No. 286 551 (Case

3312) of even date entitled "Device for Waste Water Treatment." Figure 2 is a plot of metal concentration versus number of cathodes used for acid copper and cyanide zinc rinse water treatment systems. Figure 3 is a plot of metal and cyanide concentrations versus treatment time for the cadmium cyanide treatment system. Figure 4 is a plot of metal concentration versus treatment time for the Watts nickel rinse water treatment system. Figure 5 is a plot of copper concentration versus treatment time for the ammoniacal copper etchant rinse water treatment system. Figure 6 is a plot of copper concentration versus treatment time for the copper electroless rinse water treatment system.

The process of this invention will be described in detail in conjunction with the apparatus shown in Figure 1 and preferably used for conducting the process. As indicated in Figure 1, a cell box 10, which can be made of "ROTOMOLDED" cross-linked polyethylene, polypropylene or other equivalent plastics material, has an upper flange 11 therearound. An inlet nozzle 12 and an outlet nozzle 13 of plastics material, e.g. polyvinyl chloride, the latter surmounting a standpipe 14, permit the waste water to be treated to pass into and out of the cell 10. Endspacers 15 of polyvinyl chloride or equivalent nonconductive material are provided at either end of the cell box 10. As shown, the endspacer 15 at one end of the cell box 10 fits over the standpipe 14. Anodes 16, which may be of the dimensionally-stable type, are separated from metallized open-cell organic polymeric foam cathodes 17 at their outer peripheries by nonconductive intermediate spacers 18, which may be made from polyvinyl chloride or equivalent plastics material. Plastics material isolator snaps S, e.g. of nylon, (known in the art) can be used to aid in separating the main body portions of the anodes 16 from the cathodes

17. An anode busbar 19 is positioned on one undersurface of the cell box flange 11 and correspondingly a cathode busbar 20 is positioned similarly on another, e.g., the opposite undersurface of the flange 11. Anode contact bars 21 with extensions are positioned on the upper portions of the anodes 16, to effect contact with the anode busbar 19 and, correspondingly, cathode contact bars 22 with extensions are positioned in the upper portions of the cathodes 17, to make electrical connection with the cathode busbar 20. The metallized organic polymeric foam open-pore cathodes 17 are employed with generally U-shaped sheet metal, e.g., galvanized sheet, cathode contact bars 22, which are secured to the upper portions of the cathodes 17 by slipping them over the cathodes 17 and pinching or pressing the sheets at selected portions of or across their entire length, so as to fasten securely the upper portions of the cathodes 17. Respective anode terminal connectors 23 and cathode terminal connectors 24 join the anode contact bars 21 to the anode busbar 19 and the cathode contact bars 22 to the cathode busbar 20. A cell cover plate (not shown) can be utilized to close the electrolytic cell 10. Such a cell cover plate is not required, however. The size and number of the anodes and cathodes employed, in the process of this invention, will depend upon the volume of plating plant rinse water or other waste water to be treated, as well as the type and concentration of contaminants contained in such rinse water and the level desired in the effluent, in conjunction with the treatment time for which a given volume thereof is in contact with the active electrolytic elements positioned within the cell box 10.

In carrying out the process of this invention, the anodes 16 located within the cell box 10 can be of a variety of types. Consumable anodes can be employed, e.g., graphite, lead, magnesium, aluminium or nickel, or stable anodes, e.g., dimensionally-stable anodes such as those having a substrate of titanium or other valve metal with one or more comparatively thin metal, alloy or metal oxide coatings of precious metals, e.g., iridium, tantalum or ruthenium, or coatings of nonprecious metal oxides of lead, manganese, etc., thereon. Moreover, some or all of the anodes 16 can be metal-plated organic polymeric foam electrodes, e.g., nickel-plated polyurethane foam for use in cyanide oxidation. According to another embodiment of this invention, one or more or all of the anodes is/are made of carbon or lead, having openings or perforations to allow the waste water to flow through.

In accordance with a preferred embodiment of this invention, dimensionally-stable anodes are utilized having a titanium substrate to which a coating of iridium/tantalum alloy has been applied by known procedures. One such dimensionally-stable anode is that commercially available under the designation "TIR-200 ®." "TIR-2000" is a registered trademark of Diamond Shamrock Technologies of Geneva, Switzerland.

The organic polymeric foam substrate which is used should be one having mostly interconnected pores, viz., of the open-cell type. Suitable polymeric foam materials which can be employed include, but are not limited to, polyurethane foam, such as the open-cell polyurethane foams exemplified by Scott Industrial Foam, Q version, Scott Industrial Foam, PVC coated and Scott-felt foam; polyether-urethane foam; polyester-urethane foam; etc. The foam substrate material can have pore sizes ranging from about 0.25 to 2.5 mm (10 to 100 mils or 0.010 to 0.100 inch). Usually, however, the average pore size of the foam substrate ranges from about 0.5 to 1.0 mm (20 to 40 mils or 0.020 to 0.040 inch). The term "pore size" refers to the average diameter of the foam pores prior to the first, viz., electroless, metal deposition procedure. Such foam substrates characteristically contain about 8 to $18^+$ or more pores per cm (about 2o to $45^+$ pores per inch (ppi)).

The porous cathodes 17 are prepared by first electrolessly and then electrolytically plating on to the foam substrate the desired metal, e.g., copper, nickel, silver, gold, etc., or alloys of metals can be deposited upon the substrate, e.g., bronze and brass. Characteristically, the total thickness of the metal layer applied electrolessly and then electrolitically ranges from about $2.5 \times 10^{-3}$ to $1.25 \times 10^{-2}$ mm (about 0.10 to about 0.50 mil) and more usually ranges from about $5.0 \times 10^{-3}$ to $1.0 \times 10^{-2}$ mm (0.2 to 0.4 mils) total thickness. The plating of the metals, both electrolessly and then electrolytically, is usually performed at ambient or room temperature, although higher or lower temperatures can be used.

The plating plant rinse water or other waste water is then fed through the inlet nozzle 12 into contact with the plurality of anodes 16 and cathodes 17 in the apparatus shown in the drawing. Usually this purification procedure is conducted at a current ranging from 100 to 600 amps and at 2 to 6 volts at ambient room temperature, for periods sufficient to allow adequate contact of the rinse water with the anodes and cathodes.

The invention is described in additional detail in the examples which follow. In these examples, all parts, percentages and ratios are by weight, unless otherwise indicated. All metal concentrations were determined using standard atomic absorption techniques. Cyanide and cyanate concentrations (where applicable) were determined by titration methods known in the art. All calculations (where applicable) were performed with the selected figures from the upper stated value of any given range.

EXAMPLE 1

Fabrication of Cu Metallized Foam Open-pore Electrode

Polyurethane foam substrates were metallized with copper, first electrolessly and then electrolytically in a similar manner. The organic polymeric foam substrate was, e.g., polyurethane, such as Scott Industrial Foam (Q version) having 12 pores/cm (30 pores per inch (ppi)) and an average pore diameter of 0.85 mm (33 mils), having a layer of copper deposited electrolessly on it by immersion in the below-described electroless copper plating bath for periods ranging from 2 to 25 minutes at ambient temperature. Typically, the electroless deposition of copper was effected by immersing the organic polymer foam substrate in the electroless plating bath for 15 to 25 minutes at room temperature, viz., $15^{\circ}$ to $30^{\circ}$C.

Prior to immersing the polyurethane foam in the electroless copper plating bath, it was treated with a sensitizing material and then a catalyzing material to render it receptive to electroless copper plating. Thus, the polyurethane substrate was immersed at room temperature for 2 to 10 minutes in an aqueous sensitizing solution containing stannous chloride and hydrochloric acid. Typically, the sensitizing bath contained 5 to 15 grams per litre of anhydrous stannous chloride, $SnCl_2$, and 0.005 to 0.015 gram per litre of hydrochloric acid, HCl. It was thoroughly rinsed and then immersed for 2 to 10 minutes in an aqueous catalyzing solution containing palladium chloride and hydrochloric acid. The catalyzing bath contained 0.2 to 1.0 gram per litre of palladium chloride, $PdCl_2$, and 0.005 to 0.015 gram per litre of hydrochloric acid. The foam was then thoroughly rinsed with water, ready for the electroless copper deposition.

Then as noted, the prepared organic polymer foam substrate was immersed in the electroless plating bath, maintained at ambient temperature, viz., 15° to 30°C. The electroless plating bath contained 10 to 15 grams per litre of cupric sulphate pentahydrate, 50 to 55 grams per litre of sodium potassium tartrate, 8 to 13 grams per litre of sodium hydroxide and 18 to 23 grams per litre of formaldehyde. The copper electroless plating bath was prepared by adding the aforementioned components to water and agitating the mixture to obtain thorough dissolution.

The electrode substrate so prepared was electrolessly plated using the above-mentioned bath, followed by electrolytic plating using a conventional copper electroplating bath such as the below-tabulated acid-sulphate copper bath. Consumable Cu anodes (copper sheets) were used to maintain the bath composition.

| Constituent | Range | Nominal Value |
|---|---|---|
| Cupric sulphate pentahydrate ($CuSO_4 \cdot 5H_2O$) g/l | 33-45 | 40 |
| Sulphuric Acid ($H_2SO_4$) g/l | 10-25 | 15 |
| Temperature: °C | 15-30 | 20 |
| Current Density: amp/m$^2$ | 269-1075 | 806 |
| amp/ft$^2$ | 25-100 | 75 |
| Plating Time: min | 30-60 | 45 |

The resulting open-pore copper electrodes contained approximately 100 grams of copper per 38 x 46 x 0.65 cm (15" x 18" x 1/4") electrode substrate and are suitable for use as cathodes in the process of this invention. Characteristically, the Cu (or other metal plating) ranges from 0.1 to 0.3 grams per cubic centimetre of foam substrate.

EXAMPLE 2

Nickel Electrode Fabrication

Polyurethane foam substrates as in Example 1 were metallized with nickel electrolessly and then electrolytically in a similar manner to the procedure described for fabrication of the copper metallised electrodes of Example 1, the resultant Ni metallized electrodes containing approximately 100 grams of nickel per 38 x 46 x 0.65 cm (15" x 18" x 1/4") electrode.

The organic polymer foam substrate, e.g., polyurethane, had a layer of nickel deposited electrolessly thereon by immersion in an electroless nickel plating bath for periods ranging from 2 to 60 minutes at temperatures ranging from $15^{O}$ to $60^{O}$C. Usually, however, the electroless deposition of nickel is effected by immersing the organic polymer foam substrate in the electroless plating bath for 5 to 10 minutes at a temperature from ambient room temperature, viz., about $20^{O}$C, to $35^{O}$C.

Prior to immersing the polyurethane foam in the electroless nickel plating bath, it must be treated with a sensitizing material and then a catalyzing material to render it receptive to electroless nickel plating. Thus, the polyurethane substrate was immersed at room temperature in an aqueous sensitizing solution containing stannous chloride and hydrochloric acid, it was then thoroughly rinsed, immersed in an aqueous catalyzing solution containing palladium chloride and hydrochloric acid and thoroughly rinsed again, so as to be ready for the electroless nickel deposition. Characteristically, the polyurethane substrate was immersed in the sensitizing bath and the catalyzing bath for 2 to 10 minutes each at ambient temperature. Typically, the sensitizing bath contained 5 to 15 grams per litre of anhydrous stannous chloride and 0.005 to 0.015 gram per litre of hydrochloric acid. The catalyzing bath contained 0.2 to 1.0 gram per litre of palladium chloride and 0.005 to 0.015 gram per litre of hydrochloric acid.

Then, the prepared substrate was immersed in the electroless bath, customarily maintained at ambient

- 14 -

to a slightly elevated temperature, e.g., from 20° to 60°C. The electroless plating bath was composed of two components, one containing nickel chloride, $NiCl_2 \cdot 6H_2O$, ammonium chloride, sodium citrate and ammonium hydroxide and the other containing sodium hypophosphite and water. The electroless plating bath was prepared by first adding the nickel chloride, the ammonium chloride, the sodium citrate and the ammonium hydroxide to the water and thoroughly agitating the mixture to obtain dissolution of the components. Then the sodium hypophosphite was added to water and agitated to obtain dissolution. Both bath components were added together to obtain the nickel electroless plating bath. Characteristically, the electroless plating bath contained 40 to 50 grams per litre of hydrated nickel chloride, 45 to 55 grams per litre of ammonium chloride, 95 to 105 grams per litre of sodium citrate, 250 to 275 grams per litre of ammonium hydroxide and 10 to 20 grams per litre of sodium hypophosphite.

The foam substrate after being electrolessly plated as described, was then subjected to electrolytic plating using a conventional nickel electroplating bath. The constituents of this bath were nickel sulphate and boric acid. Consumable nickel anodes were used to maintain the bath composition. A typical composition and operating conditions and their range are as follows:

|  | Range (g/l) | Nominal Value (g/l) |
|---|---|---|
| Nickel sulphate ($NiSO_4 \cdot 6H_2O$) | 225-375 | 330 |
| Boric acid ($H_3BO_3$) | 30-40 | 37 |
| Temperature : °C | 45-65 | 60 |
| pH | 4.0-6.0 | 4 |
| Current density: amps/m$^2$ | 269-1075 | 538 |
| amps/ft$^2$ | 25-100 | 50 |

EXAMPLE 3

Acid Copper Rinse Water Treatment

Copper-plated electrodes prepared according to Example 1 were assembled in an electrolytic cell of the type shown in Figure 1 and used for the removal of copper from a plating plant effluent rinse water stream. The metal cation, $Cu^{2+}$, was plated out on to the cathodes as a neutral metal. The conjugate anion, $SO_4^{2-}$, was left untreated during these tests. The anode electrochemical reaction was the evolution of oxygen with subsequent protonation of the rinse water solution. The tests were conducted for a minimum of 200 hours on line. The flow rate of the rinse water through the system was 7.6 litres (2 US gallons) per minute, the system being operated in the single pass mode, with the average metal cation inlet concentration of 160 mg/litre producing an average outlet metal cation concentration of 14 mg/litre. The area of plate of one side on these cathodes was 884 $cm^2$ (0.95 $ft^2$) and 37 cathodes were used in the cell for the tests. Forty-one TIR-2000 electrodes (commercially-available dimensionally-stable Ti anodes having an Ir/Ta coating thereon) were employed as the anodes. Similarly, the active area of the anodes on one side was 884 $cm^2$ (0.95 $ft^2$). Characteristically, the TIR-2000 anode consists of a 1.5 mm (0.060 inch) thick titanium expanded mesh substrate coated with the oxides of tantalum, iridium and titanium.

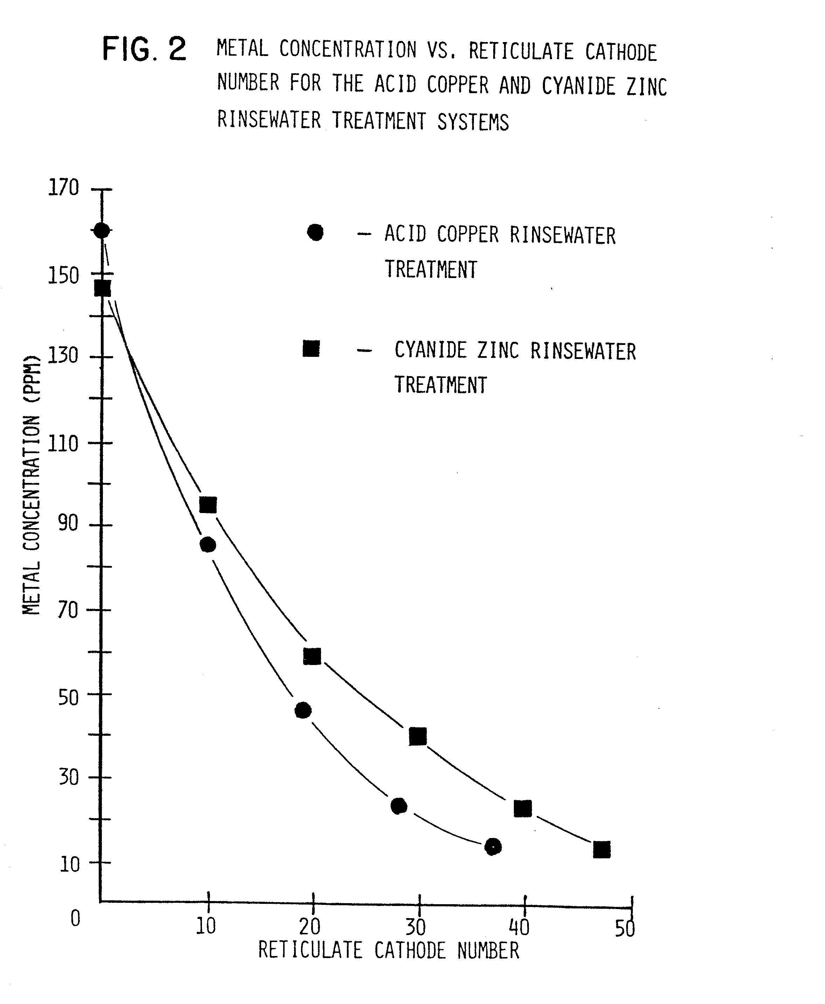

Using this metal removal system, cathode lifetimes of 200 hours were obtained, producing an average uptake weight of 0.5 kg (1.10 lbs) of copper per cathode. The cell current used for the system ranged from 110 to 130 amps producing a cathode current density range of 33.4 to 40.0 amps/$m^2$ (3.1 to 3.7 amps/$ft^2$) namely 3.0 to 3.5 A/cathode, based on the area of plate of one side of a cathode. A resulting voltage range of 2.1 to 2.7 volts, a resulting DC power consumption not greater than 5.3 Kilowatt hrs/kg (2.4 kilowatt hrs/lb) of metal removed and a resulting current efficiency of 43 percent were given. The average pH of the Cu-containing waste water flowing into the cell was 3.2 and the average pH of the treated effluent leaving the cell was 2.1. Figure 2 illustrates the metal concentration for the copper removal system as a function of the number of Cu cathodes employed at the above operating conditions. The average metal removal efficiency of the system was 91 percent.

EXAMPLE 4

Cyanide Zinc Rinse Water Treatment

Using the electrode cell system for the removal of zinc from a plating plant effluent rinse water stream, the metal cation, $Zn^{2+}$, was plated out on to the cathode as a neutral metal. The conjugate anion, $CN^-$, was left untreated during these tests. The anode electrochemical reaction was the evolution of oxygen with subsequent protonation of the rinse water. The tests were conducted for a minimum of 100 hours on line. The flow rate of the rinse water through the system was 7.6 litre (2 US gallons) per minute, the system being operated in the single pass mode, with the average metal cation inlet concentration of 147 ppm producing an average outlet metal cation concentration of 15 ppm. The type of cathode employed was the copper-plated polyurethane electrode of Example 1, 8 mm (1/4 inch) thick, with an average pore size of 0.85 mm (33 mils), more commonly referred to as the 12 pores/cm or 30 pores per linear inch (30 ppi) type. The area of plate of one side on the cathodes was 1300 $cm^2$ (1.40 $ft^2$) and 46 cathodes were used in the cell for the tests. Fifty-one graphite electrodes were employed as the anodes. Similarly, the active area of the anodes on one side was 1300 $cm^2$ (1.40 $ft^2$). Characteristically, the graphite electrodes were cut from an extruded block of graphite and fabricated into plates in which holes were drilled to allow solution to flow through them.

For this particular system, the cathode lifetime was 100 hours, producing an average uptake weight of 0.3 kg (0.66 lbs) of zinc per cathode. The cell current for the system ranged from 550 to 600 amps producing a cathode current density range of 91.0 to 100 amps/m$^2$ (8.5 to 9.3 amps/ft$^2$), namely 12 to 13 A/cathode, based on the area of plate of one side of a cathode. A resulting voltage range of 4.0 to 5.5 volts, a resulting DC power consumption not greater than 55 kilowatt hrs/kg (25 kilowatt-hrs/lb) of metal removed, and a resulting cathode plating efficiency of 8.2 percent were given. The average pH of the water fed into the cell was 12.5 and the average pH of the effluent from the cell was 12.2. Figure 2 illustrates the metal concentration for the zinc removal system as a function of cathode number at the above operating conditions. The average metal removal efficiency of the system was 90 percent.

EXAMPLE 5

Cadmium Cyanide Rinse Water Treatment

Using the electrode cell system for the concurrent removal of cadmium and the oxidation of cyanide to cyanate in a simulated rinse solution, the metal cation, $Cd^{2+}$, was plated out on to the cathode, as a neutral metal and the conjugate anion, $CN^-$, was oxidized to cyanate, $CNO^-$, at the anode.

The tests were conducted as batch operations on the laboratory scale for 200 minutes with a batch size of 15 litres (4 US gallons). The flow rate of the simulated rinse solution was 3.75 litres (one gallon) per minute, the system being operated in the recirculating mode with 50 passes of the system reservoir, volume 15 litres (4 gal). The initial $Cd^{2+}$ concentration was 141 ppm and the final $Cd^{2+}$ concentration was 0.02 ppm. The initial $CN^-$ concentration was 270 ppm and the final $CN^-$

concentration was 8 ppm with a $CNO^-$ concentration of 395 ppm. The pH was initially set at 12.0 by NaOH addition to the reservoir and it decreased to 11.8 at the end of the run.

The type of cathode employed was the copper-plated polyurethane electrode of Example 1, 8 mm (1/4 inch) thick with an average pore size of 0.85 mm (33 mils). The area of plate on one side of the cathodes was 149 $cm^2$ (0.16 $ft^2$) and 3 cathodes were used in the cell for these tests. Four 12-pore/cm (30 ppi) nickel-plated polyurethane electrodes, prepared as described above by electrolessly and then electrolytically plating Scott Industrial Foam (Q version) 8 mm (1/4 inch) thick, with a facial area of 149 $cm^2$ (0.16 $ft^2$) each, were used as the anodes. The cell current for the system was 3 amps producing a cathode current density of 66 amps/$m^2$ (6.1 amps/$ft^2$), namely 1.0 amp/cathode, based on the facial area of one side of an electrode. This cell current produced a cell voltage of 2.4 volts. Additionally, the cathode plating current efficiency was 10 percent, the anode cyanide oxidizing current efficiency was 81 percent and the DC power consumption of the cell was 0.022 kilowatt-hrs/litre (0.006 kilowatt-hrs/gal) of batch. Figure 3 illustrates the $Cd^{2+}$ and $CN^-$ concentrations as a function of time for the runs. The cadmium metal removal efficiency was +99 percent and the cyanide oxidation efficiency was +95 percent.

EXAMPLE 6

Watts Nickel Rinse Water Treatment

Using the electrode cell system for the removal of nickel from a simulated rinse solution, the metal cation, $Ni^{2+}$, was electrochemically plated out on to the cathode, as a neutral metal, and the conjugate anions, $Cl^-$ and $SO_4^{2-}$, were left untreated during these tests. The anode electrochemical reaction was the evolution of oxygen with subsequent protonation of the rinse solution.

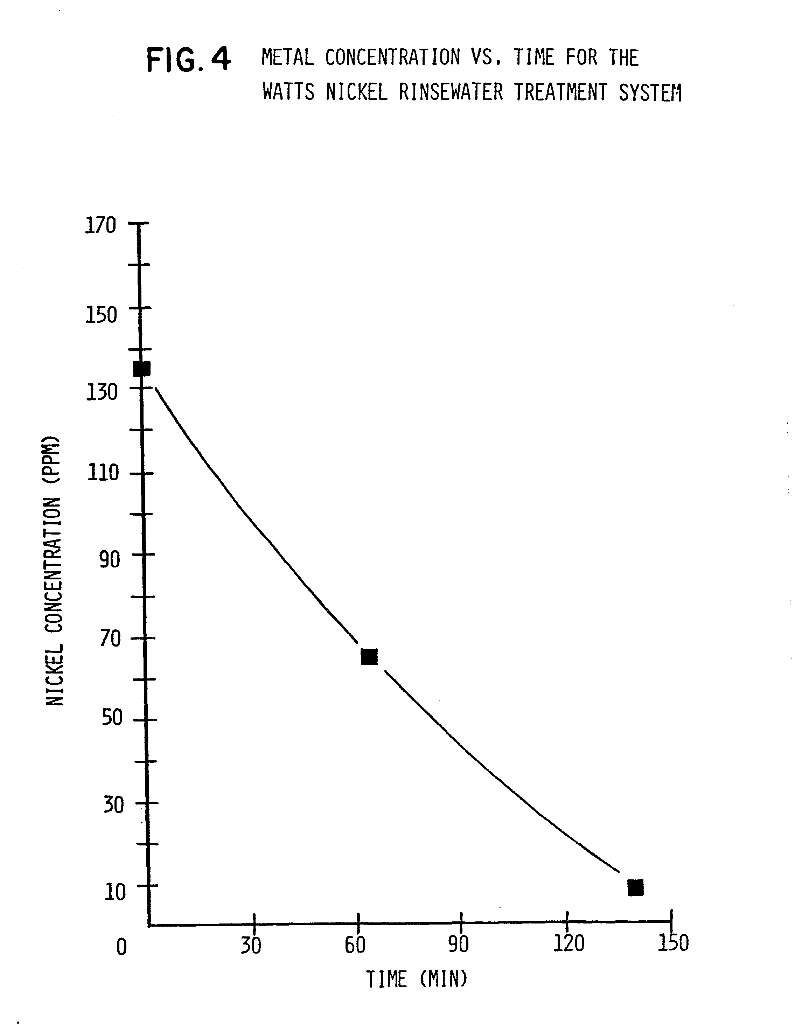

The tests were conducted as batch operations on the laboratory scale for 150 minutes with a batch size of 15 litres (4 US gallons). The flow rate of the simulated rinse solution was 3.75 litres (one gallon) per minute, the system being operated in the recirculating mode with 37 passes through the system reservoir, volume 15 litres (4 US gal). The initial concentration was 135 ppm and the final concentration was 8 ppm. The pH of the system was held in the range from 4 to 7 by use of a pH controller. To improve the conductivity of the rinse solution, ammonium sulphate, $(NH_4)_2SO_4$, was added to the reservoir at a concentration of 5 grams/litre. The type of cathode employed was the copper-plated polyurethane electrode described in Example 1, 8 mm (1/4 inch) thick with an average pore size of 0.85 mm (33 mils or 30 ppi foam). The area of plate of one side of the cathode was 149 $cm^2$ (0.16 $ft^2$) and 3 cathodes were used in the cell for these tests. Four dimensionally stable TIR-2000 electrodes (as in Example 3) were employed as the anodes. The active facial area of the anodes was 149 $cm^2$ (0.16 $ft^2$) based on one side of the anode (298 $cm^2$ or 0.32 $ft^2$/anode). The cell current was 4.8 amps producing a cathode current density of 107.5 amps/$m^2$ (10 amps/$ft^2$), namely 1.6 amps/cathode, based on the facial area of plate on one side of a cathode. This produced a cell voltage of 4.0 volts. Additionally, the cathode plating current efficiency was 14 percent and the DC power consumption of the cell per unit weight of metal removed was 24.2 kilowatt-hrs/kg (11 kilowatt-hrs/lb) of nickel. Figure 4 illustrates the nickel concentration as a function of time for the runs. The nickel metal removal efficiency was 94 percent.

EXAMPLE 7

Ammoniacal Copper Etchant Rinse Water Treatment

Using the electrode cell system for the removal of copper from a simulated rinse solution, the metal cation, $Cu^{2+}$, was electrochemically plated out on to the cathode, as a neutral metal, and the conjugate anion, $Cl^-$, was left untreated during these tests. The anode electrochemical reaction was the evolution of oxygen with subsequent protonation of the rinse solution.

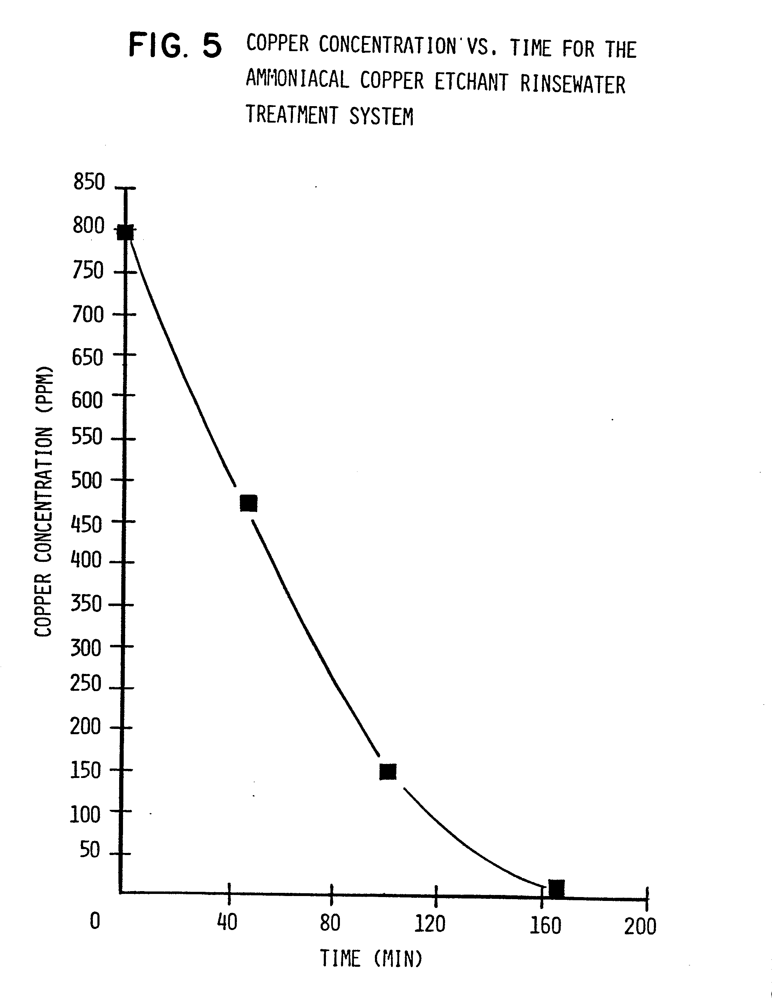

The tests were conducted as batch operations on the laboratory scale for 165 minutes with a batch size of 12 litres (3.2 US gallons). The flow rate of the simulated rinse was 1.88 litres (1/2 US gallon) per minute, the system being operated in the recirculating mode with 28 passes through the system reservoir, volume 12 litres (3.2 gal). The initial concentration was 790 ppm and the final concentration was 12 ppm. The pH of the system was initially 10.0, dropping to a final pH of 9.5. The type of cathode employed was the copper-plated polyurethane electrode of Example 1, 8 mm (1/4 inch) thick with an average pore size of 0.85 mm (33 mils or 30 ppi foam). The area of plate of one side of the cathode was 149 $cm^2$ (0.16 $ft^2$) and 3 cathodes were used in the cell for these tests. Four TIR-2000 electrodes (as in Example 3) were employed as the anodes. The active facial area of the anodes was 149 $cm^2$ (0.16 $ft^2$) based on one side of the anode (298 $cm^2$ or 0.32 $ft^2$/anode). The cell current was 4.8 amps producing a cathode current density of 107.5 amps/$m^2$ (10 amps/$ft^2$), namely 1.6 amps/cathode, based on the facial area of plate on one side of a cathode. This produced a cell voltage of 3.6 volts. Additionally, the cathode plating current efficiency was 60 percent and the DC power consumption of the cell per unit weight of metal removed was 5.06 kilowatt-hrs/kg (2.3 kilowatt-hrs/lb) of copper. Figure 5 illustrates the copper concentration as a function of time for the runs. The copper metal removal efficiency was 98 percent.

EXAMPLE 8

Electroless Copper Rinse Water Treatment

Using the electrode cell system for the removal of copper from a simulated rinse solution, the metal cation, $Cu^{2+}$, was electrochemically plated out on to the cathode, as a neutral metal, with the conjugate anions and chelating agents being left untreated during these tests. The anode electrochemical reaction was the evolution of oxygen with subsequent protonation of the rinse solution.

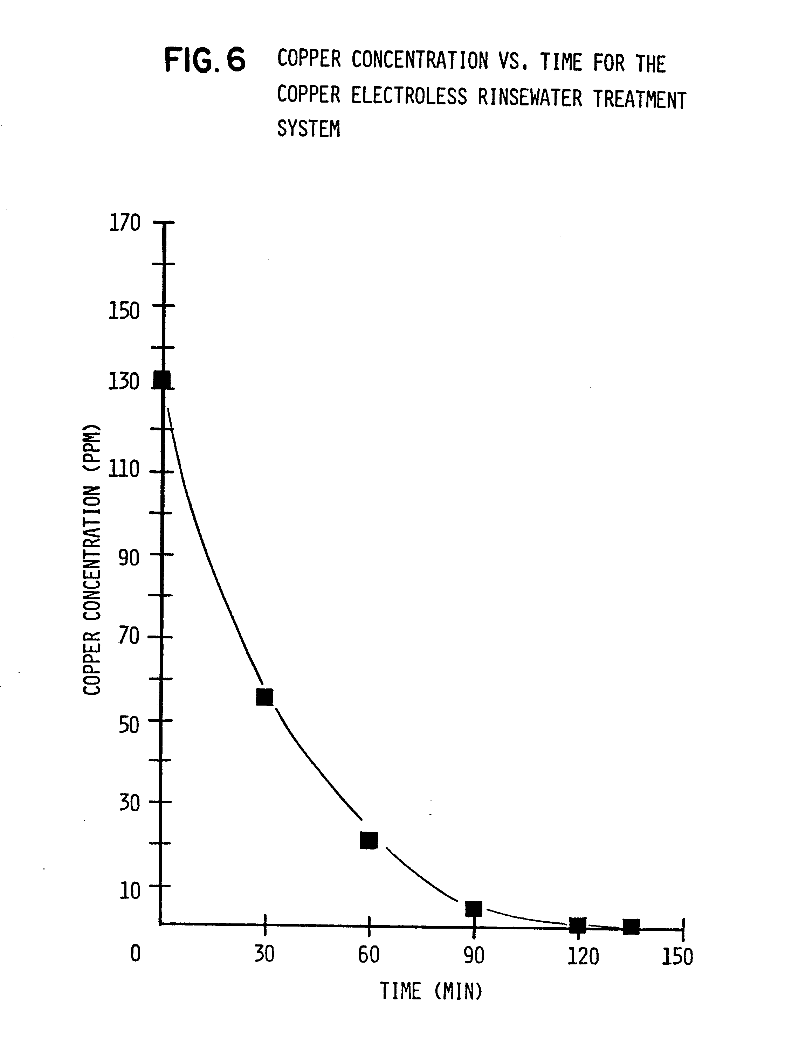

The tests were conducted as batch operations on the laboratory scale for 135 minutes with a batch size of 15 litres (4 US gallons). The flow rate of the simulated rinse was 3.75 litres (one gallon) per minute, the system being operated in the recirculating mode with 37 passes through the system reservoir, volume 15 litres (4 gal). The initial concentration was 132 ppm and the final concentration was 1.2 ppm. The pH of the system was initially 5.3, dropping to a final pH of 3.6. The type of cathode employed was the copper-plated polyurethane electrode of Example 1, 8 mm (1/4 inch) thick with an average pore size of 0.85 mm (33 mils or 30 ppi foam). The area of plate of one side of the cathodes was 149 cm$^2$ (0.16 ft$^2$) and 3 cathodes were used in the cell for these tests. Four TIR-2000 electrodes (as in Example 3) were employed as the anodes. The active facial area of the anodes was 149 cm$^2$ (0.16 ft$^2$) based on one side of the anode (298 cm$^2$ or 0.32 ft$^2$/anode). The cell current was 3 amps, producing a cathode current density of 68 amps/m$^2$ (6.3 amps/ft$^2$), namely 1 amp/cathode, based on the facial area of plate on one side of a cathode. This produced a cell voltage of 3.8 volts. Additionally, the cathode plating current efficiency was 22 percent and the DC power consumption of the cell per unit weight of metal removed was 13.64 kilowatt-hrs/kg (6.2 kilowatt-hrs/lb) of copper. Figure 6 illustrates the copper concentration as a function of time for the runs. The copper removal efficiency was 99 percent.

CLAIMS:

1. An electrolytic process for reducing the amount of one or more metal contaminants in waste water, by passing the waste water in contact with electrically-energized anodes and cathodes, characterised in that the waste water is electrolysed in a membrane-free and diaphragm-free cell having a plurality of anodes alternating with a plurality of cathodes, each anode having openings through which the waste water flows and each cathode comprising a metallized open-cell organic polymeric foam substrate.

2. A process according to claim 1, in which the waste water also contains cyanide and each anode also comprises a metallized open-cell organic polymeric foam substrate.

3. A process according to claim 1 or 2, in which the waste water is treated in a single pass through the cell.

4. A process according to claim 3, in which the concentration of metal contaminants is reduced from an amount in the range from 140 to 180 ppm to an amount in the range from 5 to 25 ppm.

5. A process according to claim 1 or 2, in which the waste water is treated in a recycling system which includes the cell.

6. A process according to claim 5, in which the pH value is in the range from 11 to 13.

7. A process according to any preceding claim, in which the foam substrates are metallized first electrolessly and then electrolytically.

8. A process according to any preceding claim, in which the foam substrates comprise polyurethane.

9. A process according to any preceding claim, in which the electrodes are metallized with copper, nickel, silver, gold or alloys thereof.

10. A process according to any preceding claim, in which the metal contaminant is one or more of copper, nickel, zinc and cadmium.

FIG. 1

FIG. 2 METAL CONCENTRATION VS. RETICULATE CATHODE NUMBER FOR THE ACID COPPER AND CYANIDE ZINC RINSEWATER TREATMENT SYSTEMS

FIG. 3  CONCENTRATION VS. TIME FOR THE CADMIUM
CYANIDE TREATMENT SYSTEM

**FIG. 4** METAL CONCENTRATION VS. TIME FOR THE
WATTS NICKEL RINSEWATER TREATMENT SYSTEM

**FIG. 5** COPPER CONCENTRATION VS. TIME FOR THE
AMMONIACAL COPPER ETCHANT RINSEWATER
TREATMENT SYSTEM

FIG. 6  COPPER CONCENTRATION VS. TIME FOR THE COPPER ELECTROLESS RINSEWATER TREATMENT SYSTEM

# EUROPEAN SEARCH REPORT

**0074167**

Application number

EP 82303925.0

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | US - A - 3 896 013 (ZIEVERS)<br><br>* Column 2, line 15 - column 3, line 33; fig. 1 *<br><br>---- | 1,3 | C 02 F 1/46 |

**TECHNICAL FIELDS SEARCHED (Int.Cl. 3)**

C 02 F

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | |
|---|---|---|
| X | | |

| Place of search | Date of completion of the search | Examiner |
|---|---|---|
| VIENNA | 12-10-1982 | WILFLINGER |

EPO Form 1503.1  06.78